# EUROPEAN PATENT APPLICATION

(11) **EP 2 078 971 A1**
(43) Date of publication of application: **15.07.2009**
(21) Application number: 07123752.3
(22) Date of filing: 20.12.2007
(51) Int. Cl.: G02B 6/44, H01B 7/14, H01B 7/285

(54) **A cable, a method of producing such a cable, and use thereof**

(71) Applicant: ABB Research Ltd., 8050 Zürich (CH)
(72) Inventor: Lethagen, Jan-Eric, 724 71 VÄSTERÅS (SE)
(74) Representative: Dahlstrand, Björn

(57) **Abstract**

A cable comprising: an outer tubular element (7); at least one inner cable element (1, 2, 3, 10) enclosed in a channel defined by said tubular element (7); wherein there is at least one space (11-15) between at least two inner cable elements (1, 2, 3, 10) or between said at least one inner cable element (1, 2, 3, 10) and said tubular element (7). At least a part of said space or spaces (11-15) is/are filled with a gel (16) in which there are distributed compressible particles (17).

## Description

### TECHNICAL FIELD

The present invention relates to a cable comprising: an outer tubular element; at least one inner cable element enclosed in a channel defined by said tubular element; wherein there is at least one space between at least two inner cable elements or between said at least one inner cable element and said tubular element. The cable elements housed by the tubular element may be either solid or tubular, depending on their function.

The invention also relates to a method of producing such a cable, and the use of such a cable as a sea cable.

The cable may be any cable. Preferably, but not necessarily, the cable is an electric power distribution cable. Preferably, the cable is a sea cable, designed to withstand those elevated pressures that such a cable might be subjected to when positioned at large depths, and designed to withstand the chemical influence of sea water.

### BACKGROUND OF THE INVENTION

Contemporary sea cables, such as those extending from vessels or platforms down to a connection point at the sea bottom, may comprise a plurality of cable parts, e.g. three in the case of a three-phase cable, enclosed by an outer tubular part comprising armouring and outer cover. Each cable part may comprise a central electric conductor, enclosed by a layer of electric insulation, enclosed by a metallic sheath acting as a water barrier. Each cable part has a generally circular cross-section. They are gathered as close to each other as possible, leaving a central interstice between them.

The surrounding armouring presents a circular inner periphery, which is in linear contact with each of the three cable parts, while closely enclosing the latter.

Accordingly, there will be an interstice between each two neighbouring cable parts and the inner periphery of the armouring.

In order to balance the high hydrostatic pressure acting on the cable at larger depths, prior art suggest that said interstices be filled with sea water, that communicates with the surrounding sea water. Thereby, an excessive hydrostatic pressure acting on the contact lines between the individual cable parts and between each cable part and the surrounding armouring is avoided. However, sea water inside the cable, in said interstices is a potential problem since it may cause corrosion problems on the armouring, which, preferably, is made of a steel grade sensitive to such corrosion attacks. In those cases when the steel is galvanized or when a protective layer is applied thereto the problem may still remain.

Prior art, such as that disclosed in US 5 213 893, teaches the use of a filler gel as a waterproofing agent. In other words, a gel is introduced in interstices or in the cable, in order to prevent sea water from entering said interstices. A gel has the advantage of being flexible, thereby permitting bending motions of the cable, and being able of filling a target volume, even volumes or interstices of complex shape or of thin cross-section. Moreover, a gel is in itself incompressible, which enables it to contribute to the balancing of the hydrostatic pressure that the cable may be subjected to.

However, upon temperature changes in the gel and or in the other cable components during use of the cable or upon geometric changes of the cable such as those caused by the bending thereof, the volume of the interstices might be inadequate for the gel. Either the gel will require a larger volume than that offered by said interstices, and will exert an excessive inner pressure on the surrounding components. Or the gel will require a smaller volume than that offered by said interstices, whereby the gel will loose its contact with the surfaces of the surrounding components. Thereby, the gel might neither balance the hydrostatic pressure nor fully prevent water from entering into said interstices and causing corrosion problems on corrosive parts such as the armouring mentioned earlier.

### THE OBJECT OF THE INVENTION

It is an object of the present invention to present a cable in which the above-mentioned drawbacks of prior art are remedied. Accordingly it is an object of the present invention to present a cable able of withstanding an elevated outer hydrostatic pressure, while preventing an outer fluid such as sea water from penetrating into the cable and chemically affecting parts of the cable sensitive to such fluid. The cable should be of such a design that this functionality is maintained also upon thermal changes affecting the volume of different components of the cable.

### SUMMARY OF THE INVENTION

The object of the present invention is achieved by means of the cable initially defined, which is characterised in that at least a part of said space or spaces is/are filled with a gel in which there are distributed compressible particles. The fact that there are spaces between individual cable elements or between such elements and the surrounding tubular element means that there is an uneven contact, or a discontinuous contact surface, between said elements. This makes the cable more sensitive to the impact of elevated hydrostatic pressures, since the local pressure in the contact points between said elements will be even further increased, especially if the contact between individual elements only occur along thin lines or at spots along the peripheries thereof. The gel will be able of adopting such pressure, thereby, relieving said contact points from pressure, making the whole cable less sensitive to elevated hydrostatic pressures. The gel has the advantage of conferring both the properties of a liquid and those of a solid material to the filler that it forms part of. Accordingly, it may fill up the interstice or spaces very well and occupy locations of lower pressure and provide for a hydrostatic counter-pressure that balances an outer pressure applied to the cable. The compressible particles will confer an ability of the filler to compensate for volume changes of components of the cable caused by thermal changes or by geometric changes such as bending motions of the cable when the latter is located in open sea. Thereby, a more permanent and stable filling effect may be obtained than that achieved by means of prior art that uses only gel without any such particles. It should be understood that, preferably, the filler formed by the gel and said particles should fill any space as defined, but in particular interstices that are present continually or continuously in the longitudinal direction of the cable.

The cable element enclosed by the tubular element may be any element such as a tube for the transfer of a medium such as a fluid (gas or liquid), or a tube inside which tools may be transported (as in umbilicals in the off-shore industry), a filler profile, e.g. made of a polymer and filling one or more interstices between other cable elements, but in particular said cable element is a cable part for the transmission of signals or for the transmission of electric power. Accordingly, such a cable part may comprise an optic fibre or an electric conductor as the main component for its functionality. In a preferred embodiment, the cable is an electric power transmission cable, wherein said outer tubular element comprises an armouring, preferably made of a metal such as steel, covered on its outer periphery by a polymer layer protecting it from external aggression. Inside the channel formed by the armouring, there is a plurality of cable parts. For example, in the case of High Voltage Direct Current, HVDC, the number of cable parts is one or two, while in the case of three-phase High Voltage Alternating Current, the number of cable parts is three. Thus, according to a preferred embodiment, at least one inner cable element is a cable part, comprising an electric conductor, enclosed by an electric insulation, enclosed by a metallic water barrier. It is conceived that in addition to said cable parts there may also be one or more further cable elements, such as one or more signal transmission cables, enclosed by said armouring, i.e. housed in the same channel as the cable parts themselves. Typically, most or all cable elements enclosed by the tubular element have a circular outer periphery. Preferably they are gathered as closely to each other as possible, whereby contact between individual cable elements is along lines extending in the longitudinal direction of the cable. The contact may be continuous or discontinuous along said lines, depending on the specific design of the outer periphery of the cable elements. Preferably the cable elements extend in a twisted manner in relation to each other in the longitudinal direction of the cable. Preferably, also the inner periphery of the tubular element is circular, such that contact between the tubular element and any cable element enclosed thereby is also along a line extending in a longitudinal direction of the cable. Thereby a space or interstice (or channel) extending in the longitudinal direction of the cable is formed between each three or more cable elements and between each two or more cable elements and the outer tubular element. Since the elements may be twisted, thereby following a helical path, each of said spaces or interstices may also extend along a helical path in the longitudinal direction of the cable. It should be understood that, in such cases said contact lines will follow a helical line.

If the main target of the filler is to prevent water from getting into contact with a certain component, such as the surface of the tubular element, only those spaces that are delimited by that component may be filled with the filler. However, if the main objective is to balance an outer hydrostatic pressure and prevent excessive pressures from occurring along said contact lines, it is preferred that all spaces are filled with the filler. Thus, according to one embodiment of the cable of the invention, the number of said spaces is two or more, wherein each of said spaces is filled with said gel. Preferably said gel fully fills said space or spaces in which it is present.

According to one embodiment, at least one of said tubular element or said at least one inner cable element enclosed thereby comprises at least a portion thereof that is sensitive to sea water, said portion being in communication with said space. Being in communication is referred to as being exposed to said space, and thereby being easily subjected to the aggression of a liquid or gaseous medium housed in such a space, if a medium to which said portion is sensitive would be housed in said space together with or in place of said gel.

Typically, said outer tubular element comprises a metallic portion in communication with said space. The metallic portion may be directly exposed to said space, or may be covered on it its inner periphery by any protective layer, such as bitumen or a polymer layer, for example formed by a tape. Such a protective layer may supplement the protective, water proofing effect of the gel, but cannot be relied upon alone as a water barrier protecting said metallic portion from corrosion caused by sea water. However, in the presence of the gel, such a protective layer may be spared and the sensitive portion may be exposed to said space or spaces.

According to a preferred embodiment, said metallic portion of the tubular element is an armouring of the cable. Such an armouring may comprise galvanized steel wires forming the main part of said outer tubular element. Preferably, an outer protective cover, preferably made of a polymer, is attached to the outer periphery of the armouring, as is well known per se in the field of this art.

According to a preferred embodiment, said compressible particles comprise elastic shells of a polymer that sealingly encloses a gas-filled inner volume thereof.

It is preferred that the compressible particles are evenly distributed in the gel. Thereby, local filler regions of inferior ability of adopting volume changes are avoided.

Preferably, said compressible particles are present in such an amount in said gel that they are able of compensating, by means of compression (or expansion), any thermally induced volume change of the gel or any other cable component adjacent thereto within an predetermined operation temperature range of the cable. Volumetric changes to be adopted by the filler may also be due to geometric changes of the cable, such as those caused by bending motions of the latter, when located in open sea. It should be understood that, during operation, the temperature conditions in the cable may vary from time to time and depending on in what region the cable is located. Accordingly, for the case in which the cable elements are electric power distribution cables adapted for carrying high voltage and high currents, said elements may expand thermally, whereupon, the volume of said space or spaces decreases. Thereby, the compressible particles should be able of compensating, by compression thereof, for the decrease of volume, whereby the filler will be compressed to a certain extent. If, on the other hand, the gel and/or the cable elements are subjected to a thermally induced volumetric decrease, resulting in an increase of the volume of said space or spaces, the compressible particles should be able of compensating for said increase by expansion thereof. Accordingly, it might be preferred that, in an unloaded, non-operational condition of the cable, the compressible particles are somewhat compressed. This might be achieved by applying an elevated pressure, i.e. a pressure above atmospheric pressure, on a liquid that, upon solidification thereof in said space or spaces, will form said gel, and that will carry said compressible particles. However, the volume of the compressible particles must not be too high since then, the filler might not be able of adequately balance, i.e. absorb, an outer hydrostatic pressure transferred to it through the outer tubular element. Preferably, in the unloaded condition of the cable, i.e. surrounded by atmospheric pressure and at room temperature, the compressible particles occupy approximately 30 vol.% of the filler. Though, it should be emphasized that the chosen amount of compressible particles should be adapted to the compressibility required from the filler in each separate application, and that, therefore, any preferred value must be given with regard to the specific conditions of that application.

According to a preferred embodiment said gel has such surface properties that it adheres to the adjacent surfaces that delimit said space that it fills. Thereby, the gel is less likely to loose contact with said surfaces and thereby permit an aggressive medium, such as sea water, to fill any interstice formed between the gel and any such surface.

It is also preferred that said gel is geometrically stable. In other words, the gel is sufficiently solid or firm in order not to alter its position in said space due to the effect of its own weight. The geometric stability should be such that it prevents the gel from leaking out of the cable, if there should be any communication between said space or spaces and the environment surrounding the cable, which might comprise sea water at large depths.

According to a preferred embodiment, said gel is water impermeable. Thereby, the gel further prevents water, typically sea water, from getting access to said space or spaces, even if there should be a communication between said space and the environment surrounding the cable.

Preferably, said gel is electrically insulating. Thereby, the gel might contribute to the prevention of dielectric breakdown of the cable.

According to one embodiment, the gel is a silicone-based gel.

The object of the invention is also achieved by means of a method of producing a cable according to the invention, wherein said method is characterised in that a liquid mixture, forming said gel upon a chemical reaction between components thereof and containing said compressible particles, is introduced into said space or spaces and is permitted to solidify into said gel therein.

According to one embodiment, said liquid is introduced into said space or spaces of the cable during production the latter. This might be preferred in the case of new production of cables, wherein the introduction of said liquid is an integrated part of the cable production process.

According to an alternative embodiment, said liquid is introduced into said space or spaces of the cable subsequent to the production of the latter. Thereby, already produced cables may be retro-fitted with said filler, thereby improving their functionality in accordance with the teaching of this invention.

The invention also relates to the use of a cable according to the invention as a sea cable. According to one embodiment said sea cable is positioned such that it extends to, or at, depths at which said outer tubular element is unable of carrying the hydrostatic pressure, wherein at least a part of said pressure is transferred to and carried by said gel and said at least one cable element.

Further features and advantages of the present invention will be presented in the following detailed description of an embodiment and in the appended claims.

### BRIEF DESCRIPTION OF THE DRAWINGS

A preferred embodiment of the invention will, by way of example, be described more in detail with reference to the accompanying drawing, on which:

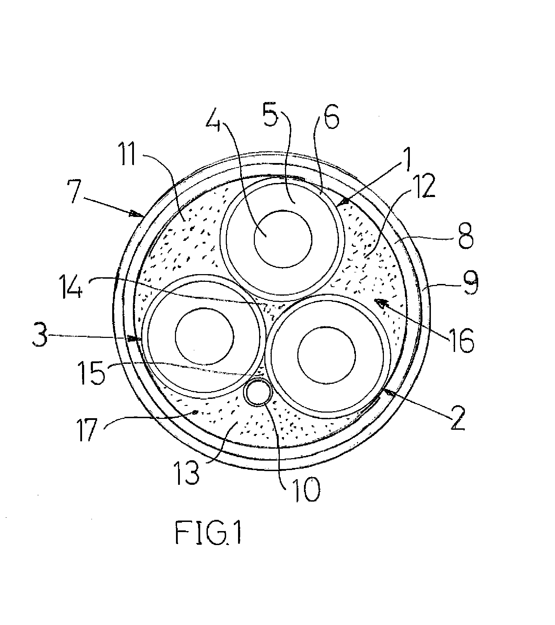

Fig. 1 is a cross section showing, in a schematic representation, a cable according to the invention.

### DETAILED DESCRIPTION OF THE INVENTION

Fig. 1 shows a cross section of a cable according to the invention. The cable shown is a so-called dynamic cable adapted for electric power transmission at high voltage and alternating current. The cable comprises three cable parts 1, 2, 3, one for each phase. Each cable part 1, 2, 3 comprises an electric conductor 4, enclosed by an electric insulation 5, which, its turn is enclosed by a water barrier 6 formed by a gas
- tight tube or layer of a suitable metal. It should be understood that there might be further layers located between said layers, as is well known in the field. For example, there might be a semi-conductive conductor screen arranged between the conductor and the insulation, and a semi-conductive insulator screen provided between the insulation and the water barrier. On the outer periphery of the water barrier 6, there might be provided a sheath of a polymer. However, for the sake of clarity, such further layers are not shown in fig. 1.

Each cable part 1, 2, 3 has a circular outer periphery. They are gathered as close as possible to each other and, accordingly, contact between the individual cable parts will be along relatively thin contact lines extending in the longitudinal direction of the cable. The cable parts 1, 2, 3 are twisted in the longitudinal direction in relation to each other, such that the contact lines extend helically in said direction. It may occur that the contact lines are broken or discontinuous due to irregular or regular changes in the shape of the outer periphery of the cable parts, whereby the contact may be regarded as occurring along a continual liner or at separate spots or sites along a line.

The cable parts 1, 2, 3 are enclosed by an outer tubular element 7 comprising an armouring 8, which in its turn, is enclosed by a protective outer cover 9 the outer periphery thereof. The armouring 8 comprises steel wires wound in plural layers. Such layers may be separated by a bedding (not shown), for example a tape layer, as is known per se. The inner periphery of the armouring 8 is circular, and is in close contact with the outer peripheries of the cable parts 1, 2, 3 along contact lines extending in the longitudinal direction of the cable. The contact lines may be discontinuous, but still regarded as continual, in the longitudinal direction of the cable, in analogy with what has been described for the contact between the individual cable parts 1, 2, 3.

In the embodiment shown in fig. 1 there is also provided an optical cable 10, forming a further cable element in addition to the cable parts 1, 2, 3 and used for signal transmission purposes. Also the optical cable 10 has a circular outer periphery and is positioned in an interstice between two neighbouring cable parts 1, 2 and the armouring 8. Here, the optical cable 10 is arranged close to an in contact with each of said cable parts 1, 2.

As a result of the design and positioning of the cable parts 1, 2, 3, the optical cable 10 and the surrounding tubular element 7, the cable will present a plurality of spaces or interstices 11-15 between said components, each of said spaces extending in the longitudinal direction of the cable. Depending on the continuity of the contact lines between the neighbouring components, the spaces 11-15 may be either separated, i.e. not in communication with its other, or in communication with each other. Each of said spaces 11-15 is filled with a filler comprising a gel 16 in which there are distributed a plurality of compressible particles 17.

In this specific embodiment the gel 16 is formed by a silicone-based polymer that, upon curing thereof, forms a gel. A liquid mixture of the components of the gel, with the compressible particles distributed therein, has been introduced into each of said spaces 11-15 and permitted to cure, or solidify, therein in order to form said gel 16. Preferably, the components of the gel have been permitted to cure under an elevated pressure, such that, in the unloaded condition of the cable, the compressible particles are compressed, the gas therein having an elevated pressure.

Preferably, each one of said compressible particles 17 comprises an elastic shell that sealingly encloses a gas-filled inner volume thereof. The shell material should be compatible with the material of the surrounding polymer matrix of the gel, at least in the respect that it adheres thereto and does not cause voids between itself and said matrix as a result of volumetric or shape changes of the latter. Preferably, the compressible particles define spheres having diameters ranging from the nanometer range to the micrometer range, even though other sizes are conceivable as well. Said shells may comprise an organic polymeric material such as polyacrylonitrile, polyvinyl chlorides, polyvinyl acetates, polyesters, polycarbonates, polyethylenes, polystyrenes, polymethyl methacrylates, polyvinyl alcohols, ethylcellulose, nitrocellulose, benzylcelloluse, epoxy resins, hydroxypropylmethylcellulose phthalate, copolymers of vinyl chloride and vinyl acetate, copolymers of vinyl acetate and cellulose acetobutyrate, copolymers of styrene and maleic acid, copolymers of acrylonitrile and styrene, copolymers of vinylidene chloride and acrylonitrile and similar substances.

Examples of suitable micro-spheres are those commercially available under the trade mark Dualite TM by Pierce and Stephens Corp., and those sold under the trade mark Expancel TM by Akzo Nobel.

The invention thus conceived has been described with reference to a preferred embodiment, however it is not limited only to what has been described, but embraces the variants and modifications which fall within the scope of the inventive idea, as defined in the appended claims supported by the description.

## Claims

1. A cable comprising
- an outer tubular element (7)
- at least one inner cable element (1, 2, 3, 10) enclosed in a channel defined by said tubular element (7),
- wherein there is at least one space (11-15) between at least two inner cable elements (1, 2, 3, 10) or between said at least one inner cable element (1, 2, 3, 10) and said tubular element (7),
**characterised in that** at least a part of said space or spaces (11-15) is/are filled with a gel (16) in which there are distributed compressible particles (17).

2. A cable according to claim 1, **characterised in that** the number of said spaces (11-15) is two or more, and that each of said spaces (11-15) is filled with said gel (16).

3. A cable according to claim 1 or 2, **characterised in that** said gel (16) fully fills said space or spaces (11-15) in which it is present.

4. A cable according to nay one of claims 1-3, **characterised in that** said compressible particles (17) comprise elastic shells of a polymer that sealingly encloses a gas-filled inner volume thereof.

5. A cable according to any one of claims 1-4, **characterised in that** the compressible particles (17) are evenly distributed in the gel (16).

6. A cable according to any one of claims 1-5, **characterised in that** said compressible particles (17) are present in such an amount in said gel (16) that they are able of compensating, by means of compression, any thermally induced volume change of the gel (16) or any other cable component adjacent thereto within an predetermined operation temperature range of the cable.

7. A cable according to any one of claims 1-6, **characterised in that** said gel (16) has such surface properties that it adheres to the adjacent surfaces that delimit said space (11-15) that it fills.

8. A cable according to any one of claims 1-7, **characterised in that** said gel (16) is geometrically stable.

9. A cable according to any one of claims 1-8, **characterised in that** said gel (16) is water impermeable.

10. A cable according to any one of claims 1-9, **characterised in that** said gel (16) is electrically insulating.

11. A cable according to any one of claims 1-10, **characterised in that** said gel (16) is a silicone-based gel (16).

12. A cable according to any one of claims 1-11, **characterised in that** at least one of said tubular element (7) or said at least one inner cable element (1, 2, 3, 10) enclosed thereby comprises at least a portion (8) thereof that is sensitive to sea water, said portion (8) being in communication with said space.

13. A cable according to any one of claims 1-12, **characterised in that** said outer tubular element (7) comprises a metallic portion (8) in communication with said space.

14. A cable according to claim 13, **characterised in that** said metallic portion (8) of the tubular element (7) is an armouring of the cable.

15. A cable according to any one of claims 1-14, **characterised in that** said at least one inner cable element (1, 2, 3) is a cable part, comprising an electric conductor (4), enclosed by an electric insulation (5), enclosed by a metallic water barrier (6).

16. A method of producing a cable according to any one of claims 1-15,
**characterised in that** a liquid mixture, forming said gel (16) upon a chemical reaction between components thereof and containing said compressible particles (17), is introduced into said space or spaces (11-15) and is permitted to solidify into said gel (16) therein.

17. A method according to claim 16, **characterised in that** said liquid is introduced into said space or spaces (11-15) of the cable during production the latter.

18. A method according to claim 16, **characterised in that** said liquid is introduced into said space or spaces (11-15) of the cable subsequent to the production of the latter.

19. Use of a cable according to any one of claims 1-15 as a sea cable.

20. Use according to claim 19, **characterised in that** said sea cable extend to depths at which said outer tubular element (7) is unable of carrying the hydrostatic pressure, wherein at least a part of said pressure is transferred to and carried by said gel (16) and said at least one cable element (1, 2, 3, 10).
